# EUROPEAN PATENT SPECIFICATION

(11) **EP 2 868 578 B1**
(45) Date of publication and mention of the grant of the patent: **28.02.2018**
(21) Application number: 14188470.0
(22) Date of filing: 10.10.2014
(51) Int. Cl.: B64D 11/00, B64C 1/18, B64D 9/00, B64D 11/04

(54) **Storage cabinet for a means of transport**
Lagerschrank für ein Verkehrsmittel
Armoire de stockage pour un moyen de transport

(30) Priority: 31.10.2013 DE 102013112019
(43) Date of publication of application: 06.05.2015
(73) Proprietor: Airbus Operations GmbH, 21129 Hamburg (DE)
(72) Inventor: Schliwa, Ralf, 21129 Hamburg (DE); Dörr, Sebastian, 21129 Hamburg (DE)
(74) Representative: LKGLOBAL Lorenz & Kopf PartG mbB Patentanwälte

(56) References cited:
- EP-A1- 2 465 774
- EP-A2- 1 174 340
- WO-A2-2010/108775
- DE-A1-102009 021 969
- US-A- 5 083 727
- US-A1- 2007 228 216
- US-A1- 2009 278 429
- US-A1- 2009 289 146

## Description

### TECHNICAL FIELD

The invention relates to the interior equipment of a means of transport. In particular, the invention relates to a storage cabinet for storing equipment in a passenger cabin of a means of transport and to an aircraft comprising such a storage cabinet.

### BACKGROUND TO THE INVENTION

The interior equipment in passenger cabins of means of transport is increasingly designed so as to be flexible in order to, for example, take into account customer requirements relating to the interior equipment, or in order to be able to rearrange the interior equipment of the means of transport with little effort in terms of time and labour so that it becomes possible, for example, to react to changed requirements relating to the storage space required.

For example, it can be intended to deploy at times on long-haul flights an aircraft that is predominantly used for short-haul flights. For this purpose it may be advantageous to expand the storage space provided, for example, for a galley module for use in long-haul flights. Furthermore, it may be desirable to be able to carry out any reconfiguration of the interior equipment during a regular stop of the aircraft without this making it necessary to factor in additional waiting time for reconfiguration. WO 2010 108 775 A2 describes a monument for a cabin of a means of transport, which monument can be used as a storage cabinet in an aircraft. In this arrangement the monument comprises a flexible attachment device that makes it possible to attach the monument relative to the cabin of the means of transport.

WO 2011 080 414 A1 describes a device for optimum cart stowage in a means of transport. In this arrangement the device comprises compartments in which catering trolleys can be received side-by-side.

Also known is document EP 2 465 774 A1, which is considered as being the closest prior art and discloses the preamble of independent claim 1.

### SUMMARY OF THE INVENTION

It is the object of the invention to provide a storage cabinet for a passenger cabin of a means of transport, which storage cabinet is suitable for flexibly enlarging the available storage space.

This object is met by the subject of the independent claim 1. Further embodiments of the invention are disclosed in the dependent claims and in the following description. One aspect of the invention relates to a storage cabinet for a passenger cabin of a means of transport for storing equipment. The storage cabinet comprises a body of a height of at least 140 cm and exclusively one attachment device. In this arrangement the attachment device is arranged in a floor region of the storage cabinet and is designed for detachably attaching the storage cabinet to corresponding floor attachment elements in the passenger cabin underneath a cabin element. For example, the body comprises a height of between 140 cm and 180 cm, for example between 150 cm and 180 cm, or between 160 cm and 180 cm. The cabin element can, for example, be a hatrack, a storage compartment, a crew rest compartment or some other component of interior equipment in the passenger cabin.

In other words, the storage cabinet can be a storage cabinet that is detachably attached in a passenger cabin of a means of transport, for example an aircraft, a train or a bus, underneath a cabin element, for example a hatrack. In this context, the term "detachably attach" may denote that the storage cabinet may be attached to, and detached from the passenger cabin without disassembly or deformation of said storage cabinet.

According to the invention, the attachment device is designed for undoing the attachment of the storage cabinet from the corresponding floor attachment elements of the passenger cabin by lifting.

This can mean that the storage cabinet and, in particular, the attachment device of the storage cabinet can be designed in such a manner that the storage cabinet can be lifted so that it becomes possible to detach it completely from the floor attachment elements of the passenger cabin. This may require the storage cabinet to comprise a height dimension that makes it possible to lift said storage cabinet without there being a need to disassemble further interior equipment. In particular, in this arrangement the passenger cabin and the storage cabinet can be designed in such a manner that the storage cabinet can be lifted by at least 5 mm, for example by 7 mm, or for example by 10 mm, without this necessitating deinstallation of the hatracks under which the storage cabinet is installed.

For easier lifting of the storage cabinet said storage cabinet can comprise a lifting device. According to the invention, handles are arranged on two opposite sidewalls on the outside of the storage cabinet, which handles may facilitate lifting the storage cabinet for the purpose of undoing the attachment device.

According to one embodiment of the invention, the attachment device comprises at least four attachment elements that are designed for attaching the storage cabinet to the corresponding floor attachment elements in the passenger cabin.

In this arrangement the at least four attachment elements can be arranged in a floor region of the storage cabinet. In particular, the attachment elements can be arranged on the inside, i.e. in the interior of the storage cabinet, on a sidewall, and/or on a bottom partition wall of the body. In this arrangement the attachment elements can be designed so as to cooperate with the corresponding floor attachment elements in the passenger cabin. This can, for example, mean that the attachment elements can be designed in such a manner that for attachment of the storage cabinet they can engage the floor attachment elements. In this arrangement, in particular, so-called quick-change fasteners can be used that can allow quick installation and deinstallation of the storage cabinet. Such a quick-change fastener can, for example, be a quick-change seat track fitting which, for example, can be designed so that it can be lowered and clicked into the floor attachment elements in the passenger cabin.

Furthermore, the attachment elements can comprise a locking device that makes it possible to detachably affix the storage cabinet to the floor attachment elements. The locking device can, for example, be designed in a lever-like manner so that the attachment elements can be locked and unlocked, for example by activating a lever.

According to one embodiment of the invention, the storage cabinet comprises a top partition wall, wherein a surface of the top partition wall, which surface faces an outside of the storage cabinet, can be used as a storage surface, and wherein on the storage surface a ledge is arranged that projects upwards towards the outside of the storage cabinet, which ledge is designed to delimit the storage surface laterally and towards the rear of the storage cabinet. The storage surface can, for example, be used to temporarily store utility objects, for example documents, journals or newspapers.

The ledge can, for example, be designed to prevent lateral and/or rear sliding or falling of objects placed on the storage surface. To this effect the ledge can, for example, be of a solid design and can be inflexibly arranged on the storage surface. The ledge can, for example, be integrally designed with a sidewall and/or a rear wall of the storage cabinet, or it can be arranged as a separate element on the storage surface. The ledge can also comprise a pivoting element, for example in the form of a hinge, and can be pivotable so that the ledge can, for example, be pivotable towards the storage surface and/or on the outsides towards the sidewalls and the rear wall of the storage cabinet in the direction of the floor region. The ledge can also comprise a sliding element and can be designed to be slidable into a corresponding guide element of the storage cabinet. However, the ledge can also be designed as an elastic element, for example comprising silicon or rubber, and can be designed so as to be deformable.

According to one embodiment of the invention, the storage cabinet comprises a net mass of at least 30 kg and is designed to accommodate a load with a mass in excess of 100 kg. In particular, the storage cabinet can comprise a net mass of between 30 kg and 60 kg and can be designed to accommodate a load in excess of 300 kg.

According to one embodiment of the invention, the body comprises a width of at least 610 mm and at most 1067 mm. In particular, the body comprises, for example, a width of between 630 mm and 765 mm. Furthermore, the body can comprise a depth of at least 800 mm, in particular of at least 900 mm.

According to one embodiment of the invention, the body comprises a convex rear wall. In other words, the rear wall of the body can be curved towards an outside of the storage cabinet. In this arrangement a contour of the rear wall can, for example, match a contour of an outer skin of the means of transport so that it is possible that there are no spaces between the body and the outer skin.

According to one embodiment of the invention, the rear wall comprises a rubber lip that is designed to rest against an outer skin of the means of transport. In this arrangement the rubber lip can be designed so as to be approximately circumferential on the rear wall, or only in a partial region of the rear wall. For example, the rubber lip can be arranged on a lateral and/or a top partition wall of the body and can project from said wall so that the rear of the storage cabinet or the rear wall can be sealed off from an environment of the storage cabinet. The rubber lip can be designed so as to prevent, at the rear, any objects from reaching the space between the storage cabinet and the outer skin.

According to one embodiment of the invention, at least one catering trolley on rollers can be accommodated in the storage cabinet. In this arrangement the storage cabinet in the floor region comprises at least one guide rail for guiding the catering trolley and at least one ramp for easier sliding of the catering trolley into the storage cabinet.

In this arrangement the guide rail can project from a sidewall of the storage cabinet in the floor region to an interior of the storage cabinet, for example in the form of a spacer, so that rollers of the catering trolley cannot jam during sliding-in and sliding - out, because said rollers can be guided by the guide rail and can be adequately spaced apart from the sidewall.

A further aspect of the present invention relates to an aircraft comprising a storage cabinet as described above and below.

According to one embodiment of the invention, the body of the storage cabinet comprises a top edge, which is spaced apart from the cabin element by at least 50 mm, in particular by at least 60 mm, so that a surface of a top partition wall of the body, which surface faces the cabin element, can be accessed from the outside and can be used as a storage surface. In this context the term "top edge" can denote a top contour of the storage cabinet. The top edge can, for example, be defined by the contour of the top partition wall or by an outside surface of the top partition wall.

In this context the space from the cabin element can be dimensioned as the space between the top edge of the storage cabinet and a bottom limiting surface of the cabin element, which bottom limiting surface is directed towards the bottom of the passenger cabin.

The storage cabinet can thus be dimensioned in such a manner that during installation or deinstallation of the storage cabinet in the aircraft between the top edge and the cabin element there is a gap or a space of at least 50 mm. On the one hand a space can make it possible for the storage cabinet to be lifted for undoing the attachment device from the floor attachment elements, and on the other hand this can make it possible for the top partition wall to be used as a further storage surface or as a storage shelf. The storage surface can, for example, be used to temporarily store utility objects, for example documents, journals or newspapers.

According to one embodiment of the invention, the storage surface comprises a non-slip surface and a ledge rising towards the cabin element, which ledge is designed to delimit the storage surface laterally and towards the rear of the storage cabinet. The surface can, for example, be rubberized or be roughened so as to be of a non-slip nature.

The ledge can be designed to prevent lateral and rearwards sliding, or falling, of objects stored on the storage surface. Furthermore, the ledge can define the top edge or the top contour of the storage cabinet, which top edge during installation and deinstallation of the storage cabinet can be spaced apart by at least 50 mm, and in particular by at least 60 mm, from the cabin element.

As described above, the ledge of the storage cabinet can also, for example, be designed as pivotable or as an elastic element. In such an embodiment the top edge of the storage cabinet can designate a top edge with the ledge pivoted-in or deformed. In this manner it is possible to ensure, during installation or deinstallation, that there is a space or gap of at least 50 mm between the storage cabinet and the lower limiting surface of the cabin element, which delimiting surface faces the passenger cabin. This can, for example, make it possible to attach or detach the attachment device of the storage cabinet from the floor attachment elements. In the actual installed state of the storage cabinet, in which state said storage cabinet can be attached in the passenger cabin, the ledge can be pivoted up again, i.e. it can project upwards from the storage surface, and it can be flush with the bottom limiting surface of the cabin element. In the case of the ledge being designed as an elastic element, in its installed state the ledge can also rest against the cabin element so as to be slightly deformed or not deformed.

According to one embodiment of the invention, for the purpose of expanding storage space in a galley module, the storage cabinet is attached in the aircraft in the location of a seat row after said seat row has been deinstalled. In other words the storage cabinet can be designed to be installed instead of a seat row, wherein the term "seat row" can, for example, refer to an individual seat, a two-seat row, or a three-seat row. Overall, this can make it possible to achieve a flexible design of the interior equipment of the aircraft and thus also flexible use of the aircraft. For example, for short-haul flights it is possible to provide an additional seat row for passengers, whereas for long-haul flights it can be advantageous to install the storage cabinet instead of the seat row in order to provide additional storage space, for example for catering trolleys and galley equipment. Because of the advantageous design of the storage cabinet it is possible to implement reconfiguration within the aircraft's turnaround time between two consecutive flights. This turnaround time can, for example, be 15 to 30 minutes, typically approximately 20 minutes.

According to one embodiment of the invention, the corresponding floor attachment elements of the passenger cabin comprise at least one seat rail and/or at least one hard point of the aircraft.

The attachment device of the storage cabinet can thus be designed to be attached to a seat rail or to a hard point of the aircraft. In this context the term "hard point" can refer to an affixation device for detachably affixing interior equipment of the aircraft, wherein hard points can be affixed to cross members and/or to longitudinal members of a floor grid of the aircraft.

According to one embodiment of the invention, the storage cabinet comprises adequately small dimensions for it to be removed, in the fully equipped state of the passenger cabin, from the aircraft in one piece through an external door of the passenger cabin.

According to one embodiment of the invention, the storage cabinet comprises adequately small dimensions for it to be removed from the aircraft in one piece through an external door of the passenger cabin, wherein the external door comprises a maximum width of 1067 mm.

The storage cabinet can thus be installed in the aircraft in a short period of time, for example the turnaround time, without this requiring deinstallation and/or deformation of further elements or modules of the interior equipment or of parts of the storage cabinet. It may merely be necessary to undo a cover of a floor region of the aircraft so that the floor attachment elements are accessible and the attachment elements of the storage cabinet can be attached to said attachment elements.

Below, exemplary embodiments of the invention are described in detail with reference to the enclosed figures.

### BRIEF DESCRIPTION OF THE DRAWINGS

Fig. 1 diagrammatically shows a front view of a storage cabinet according to one exemplary embodiment of the invention.
Fig. 2 diagrammatically shows a cross section along the line A-A of the storage cabinet of Fig. 1.
Fig. 3 diagrammatically shows a perspective view of a storage cabinet according to one exemplary embodiment of the invention.
Fig. 4 diagrammatically shows a perspective view of a storage cabinet according to a further exemplary embodiment of the invention.
Fig. 5 diagrammatically shows a storage cabinet according to one exemplary embodiment of the invention in a passenger cabin of an aircraft.
Fig. 6 diagrammatically shows a storage cabinet according to a further exemplary embodiment of the invention in a passenger cabin of an aircraft.
Fig. 7 diagrammatically shows a storage cabinet according to a further exemplary embodiment of the invention in a passenger cabin of an aircraft.
Fig. 8 shows an aircraft comprising a storage cabinet according to one exemplary embodiment of the invention.

Basically, identical or similar components have the same reference characters.

### DETAILED DESCRIPTION OF EXEMPLARY EMBODIMENTS

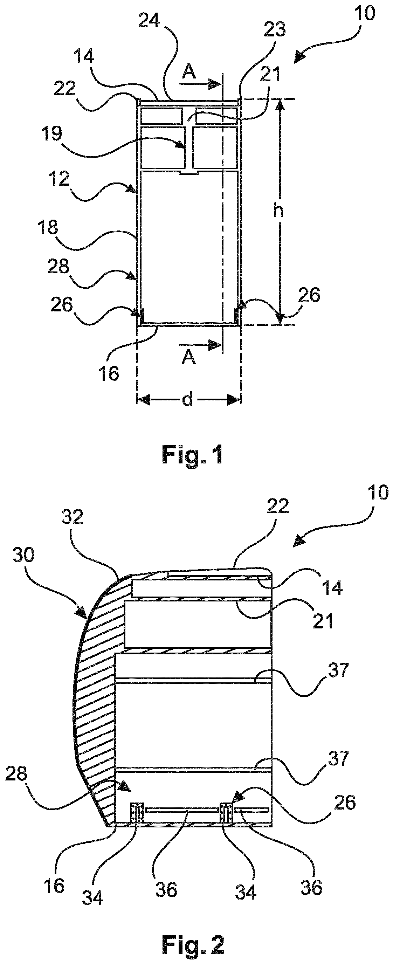

Fig. 1 diagrammatically shows a front view of a storage cabinet 10 according to one exemplary embodiment of the invention.

The storage cabinet 10 comprises a body 12 of a height h of at least 140 cm and a width d of at least 61 cm and at most 106.7 cm. In particular, the body comprises a width d between, for example, 63 cm and 76.5 cm. The body 12 in turn comprises a top partition wall 14 and a bottom partition wall 16 as well as sidewalls 18.

Furthermore, in the body 12 a structuring device 19 is arranged that comprises elements 21 that extend so as to be orthogonal and parallel to the top and bottom partition walls 14, 16, which elements 21 can be used for structuring or partitioning the interior space of the storage cabinet 10 into several regions.

From the top partition wall 14, a ledge 22 projects upwards both laterally and at the rear so that on a surface of the top partition wall 14, which surface faces an outside, a storage surface 24 is delimited laterally and towards the rear of the storage cabinet 10. In this arrangement the ledge 22 defines a top edge 23, from which the height h of the storage cabinet 10 can be determined.

On the interior of the body 12 an attachment device 26 is arranged in a floor region 28 of the storage cabinet 10. The attachment device 26 is designed for detachably attaching the storage cabinet 10 to corresponding floor attachment elements, for example in a means of transport.

Fig. 2 diagrammatically shows a cross section along the line A-A of the storage cabinet 10 of Fig. 1 with the direction of view to the inside of the sidewall 18.

The cross section of Fig. 2 clearly shows that the storage cabinet 10 comprises a convex rear wall 30 that is curved to an outside of the storage cabinet 10. A rubber lip 32 is arranged laterally on the rear wall 30, i.e. in a region in which the sidewall 18 extends, which rubber lip 32 is designed to rest against an outer skin of the means of transport. In this arrangement the rubber lip 32 projects symmetrically from the two lateral delimitations of the rear wall 30 from said rear wall 30. Furthermore, a rubber lip 32 can be arranged at the height of the top partition wall 14 and of the bottom partition wall 16.

As shown in Fig. 2, in the floor region 28 on a sidewall 18 the attachment device 26 comprises two attachment elements 34. In this arrangement the attachment elements 34 are arranged symmetrically on both sidewalls 18 and/or on the bottom partition wall 16, and, for attachment, are designed to engage corresponding floor attachment elements of the means of transport so that the storage cabinet 10 can be detachably attached with the use of the attachment elements 34.

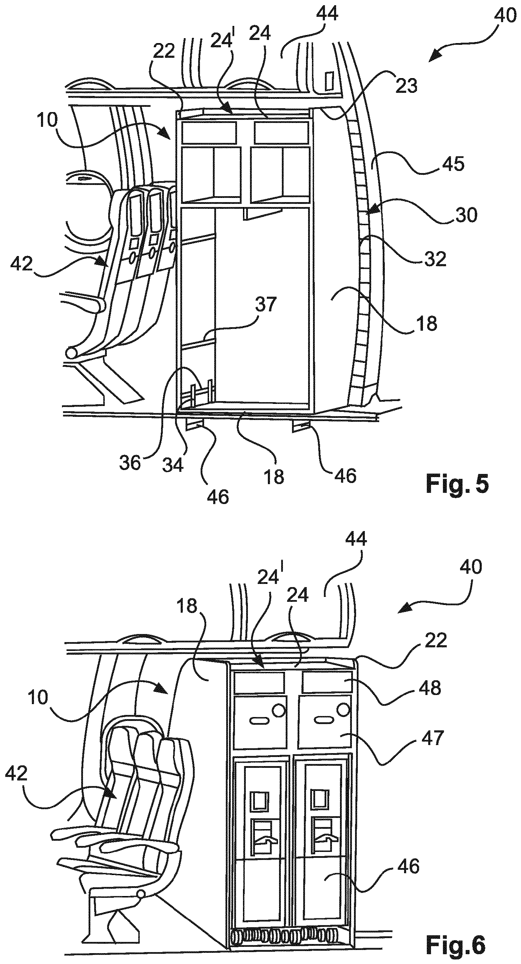

Furthermore, in the floor region in the interior of the body 12 a guide rail 36 is arranged that can be designed so as to project from the sidewall 18. In this arrangement the guide rail 36 can be arranged in the interior on both sidewalls 18 and can be designed to space apart items of equipment, for example a catering trolley 46 on rollers (see Fig. 6), from the sidewall 18.

Furthermore, on the sidewalls in the interior of the body 12 protective ledges 37 are arranged that can be designed to absorb shocks and vibrations from equipment accommodated in the storage cabinet 10, and to protect the sidewalls.

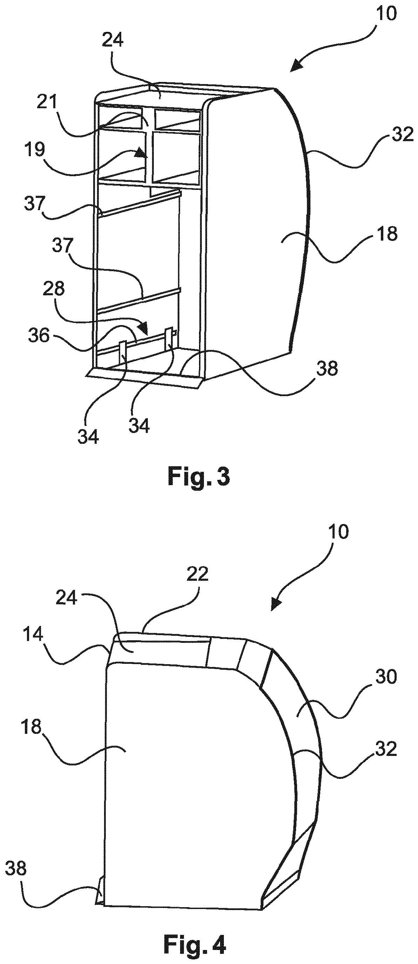

Fig. 3 diagrammatically shows a perspective view of a storage cabinet 10 according to one exemplary embodiment of the invention. Unless otherwise stated, the storage cabinet 10 of Fig. 3 comprises identical elements and characteristics to those of the storage cabinet of Figs 1 and 2.

In the floor region 28 at the front the storage cabinet 10 of Fig. 3 comprises a ramp 38 that is arranged so as to be flush with the bottom partition wall 16 and that comprises a gradient angle of at most 16°. The ramp 38 can, for example, be designed to facilitate sliding-in and sliding-out a catering trolley 46 on rollers (see Fig. 6).

Furthermore, the perspective view of Fig. 3 clearly shows the storage surface 24 delimited by the ledge 22, which storage surface can be used, for example, for storing documents, journals or newspapers. To this effect the storage surface 24 comprises a non-slip surface, for example a surface coated with rubber or silicon.

Fig. 4 diagrammatically shows a perspective view of a storage cabinet 10 according to a further exemplary embodiment of the invention. Unless otherwise stated, the storage cabinet 10 of Fig. 4 comprises elements and characteristics that are identical to those of the storage cabinets 10 shown in Figures 1 to 3.

Fig. 4 clearly shows the convex rear wall 30 with the rubber lip 32 arranged laterally and in the upper region of the storage cabinet 10.

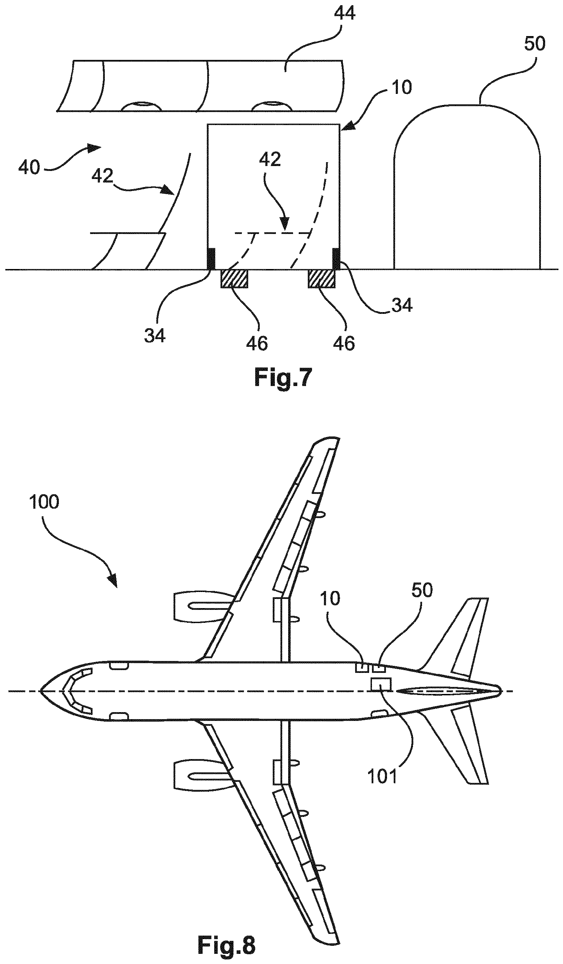

Fig. 5 diagrammatically shows a storage cabinet 10 in a passenger cabin 40 of an aircraft 100 (see Fig. 8). Unless otherwise stated, the storage cabinet 10 of Fig. 5 shows elements and characteristics that are identical to those of the storage cabinets 10 of Figures 1 to 4.

Fig. 5 shows a section of the passenger cabin 40 with a seat row 42 of three passenger seats and a hatrack 44. In this arrangement the storage cabinet 10 is detachably attached, underneath the hatrack 44, by way of the attachment elements 34, to corresponding floor attachment elements 46 of the aircraft 100. The floor attachment elements 46 can, for example, comprise a seat rail and/or a hard point of the aircraft 100.

For undoing the attachment of the storage cabinet 10 from the floor attachment elements the storage cabinet 10 is arranged under the hatrack 44 so that said storage cabinet 10 can be lifted. In other words, for the purpose of undoing the attachment from the corresponding floor attachment elements 46 the storage cabinet is designed to be lifted. To this effect a top edge 23 of the storage cabinet 10, which can be defined by the ledge 22 on the storage surface 24, is spaced apart from the hatrack 44 by at least 50 mm, for example by at least 60 mm, so that for the purpose of undoing the attachment the storage cabinet 10 can easily be lifted, for example by a worker, by at least 5 mm, for example by at least 7 mm or, for example by at least 10 mm.

Furthermore, as a result of the spacing from the hatrack 44 the storage surface 24 can be used for storing objects such as newspapers. Thus a storage shelf 24' can be formed that is delimited laterally and towards an outer skin 45 of the aircraft 100 by the ledge 22, towards the top by the hatrack 44, and downwards by the top partition wall 14 of the body 12. The storage shelf 24' is thus accessible from the front of the storage cabinet 10 and can be used as additional storage space.

Furthermore, a curvature of the rear wall 30 of the storage cabinet 10 is designed so as to match a curvature of the outer skin 45 of the aircraft 100 so that the rubber lip 32 rests against the outer skin 30 so as to provide a seal, and so that at the rear no objects can be pushed between the storage cabinet 10 and the outer skin 45 or can slide behind the storage cabinet 10.

Fig. 6 diagrammatically shows a further storage cabinet 10 in a passenger cabin 40 of an aircraft 100. Unless otherwise stated, the storage cabinet 10 of Fig. 6 comprises identical elements and characteristics to those of the storage cabinets 10 of Figures 1 to 5.

Fig. 6 shows the storage cabinet 10 in a laden state, wherein the storage cabinet 10 accommodates two catering trolleys 46 on rollers side by side, at least two standard drawers 47, and at least two standard units of galley equipment. In a fully laden state the storage cabinet 10 including its net mass can thus comprise a mass in excess of 300 kg.

The storage cabinet 10 can thus be used to expand the storage space of a galley module, wherein after deinstallation of a seat row 42 in the aircraft 100, in particular in the tail region of the aircraft 100, the storage cabinet 10 can be attached at the location of the seat row 42.

As a result of the advantageous design of the storage cabinet 10 with an attachment device 26 that can quickly be unlocked and locked, and with an external dimension of the storage cabinet 10 that allows quick undoing of the attachment by means of lifting the storage cabinet 10, the storage cabinet can be installed in the aircraft 100, for example, in the turnaround period between two flights. In this process it is only necessary to remove one seat row 42 and, if applicable, one cover from the floor attachment elements 46. There is no need to deinstall any further equipment in the passenger cabin 40 or any parts of the storage cabinet 10 itself.

Fig. 7 diagrammatically shows a further storage cabinet 10 in a passenger cabin 40 of an aircraft 100. Unless otherwise stated, the storage cabinet 10 of Fig. 7 comprises identical elements and characteristics to those of the storage cabinets 10 of Figures 1 to 6.

The storage cabinet 10 of Fig. 7 is attached, by means of the attachment device 26, to corresponding floor attachment elements 46 of the passenger cabin 40. The floor attachment elements 46 can, for example, comprise a seat rail or at least one hard point of the aircraft 100.

In this arrangement the storage cabinet 10 is arranged in the aircraft 100 after deinstallation of a seat row 42 in the location previously taken up by the seat row 42.

This is indicated by the dashed line of the seat row 42 shown in the storage cabinet 10.

Furthermore, the storage cabinet 10 comprises adequately small dimensions for it to be removed, in the fully equipped state of the passenger cabin 40, from the aircraft 100 in one piece through an external door 50 of the passenger cabin 40. In this arrangement the external door 50 comprises a maximum width of 1067 mm.

Fig. 8 shows an aircraft comprising a storage cabinet 10 and a galley module 101. In this arrangement the storage cabinet 10 is arranged in the tail region of the aircraft 100 in order to expand the available storage space of the galley module 101.

In addition, it should be pointed out that "comprising" does not exclude other elements or steps, and "a" or "an" does not exclude a plural number. Reference characters in the claims are not to be interpreted as limitations.

## Claims

1. A storage cabinet (10) for a passenger cabin (40) of a means of transport for storing equipment, with the storage cabinet (10) comprising:
a body (12) of a height of at least 140 cm; and
exclusively one attachment device (26),
wherein the attachment device (26) is arranged in a floor region (28) of the storage cabinet (10) and is designed for detachably attaching the storage cabinet (10) to corresponding floor attachment elements (46) in the passenger cabin (40) underneath a cabin element; **characterized in that** the storage cabinet is configured so as to be attached exclusively at its floor region;
the attachment device is designed for being clicked into the floor attachment elements;
the attachment device (26) is designed for undoing the attachment of the storage cabinet (26) from the corresponding floor attachment elements (46) of the passenger cabin (40) by lifting; and handles are arranged on two opposite sidewalls on the outside of the storage cabinet, so that lifting of the storage cabinet for the purpose of undoing the attachment device is facilitated.

2. The storage cabinet of one of claim 1,
wherein the attachment device (26) comprises at least four attachment elements (34) that are designed for attaching the storage cabinet (10) to the corresponding floor attachment elements (46) in the passenger cabin (40).

3. The storage cabinet (10) of any one of the preceding claims,
wherein the storage cabinet (10) comprises a top partition wall (14);
wherein a surface of the top partition wall (14), which surface faces an outside of the storage cabinet, can be used as a storage surface (24); and
wherein on the storage surface (24) a ledge (22) is arranged that projects upwards towards the outside of the storage cabinet (10), which ledge (22) is designed to delimit the storage surface (24) laterally and towards the rear of the storage cabinet (10).

4. The storage cabinet (10) of any one of the preceding claims,
wherein the storage cabinet (10) comprises a net mass of at least 30 kg and is designed to accommodate a load with a mass in excess of 100 kg.

5. The storage cabinet (10) of any one of the preceding claims,
wherein the body (12) comprises a width of at most 1067 mm.

6. The storage cabinet (10) of any one of the preceding claims,
wherein the body (12) comprises a convex rear wall (30).

7. The storage cabinet (10) of claim 6,
wherein the rear wall (30) comprises a rubber lip (32) that is designed to rest against an outer skin (45) of the means of transport.

8. The storage cabinet (10) of any one of the preceding claims,
wherein at least one catering trolley (46) on rollers can be accommodated in the storage cabinet (10),
wherein in the floor region (28) the storage cabinet (10) comprises at least one guide rail (36) for guiding the catering trolley (46) and at least one ramp (38) for easier sliding of the catering trolley (46) into the storage cabinet (10).

9. An aircraft (100) comprising a storage cabinet (10) of any one of claims 1 to 8.

10. The aircraft (100) of claim 9,
wherein the body (12) of the storage cabinet (10) comprises a top edge (23), which is spaced apart from the cabin element by at least 50 mm, so that a surface of a top partition wall (14), which surface faces the hatrack (44), can be accessed from the outside and can be used as a storage surface (24).

11. The aircraft (100) of claim 10,
wherein the storage surface (24) comprises a non-slip surface and a ledge (22) rising towards the cabin element, which ledge (22) is designed to delimit the storage surface (24) laterally and towards the rear of the storage cabinet (10).

12. The aircraft (100) of any one of claims 9 to 11,
wherein for the purpose of expanding storage space in a galley module (101) the storage cabinet (10) is attached in the aircraft (100) in the location of a seat row (42) after said seat row (42) has been deinstalled.

13. The aircraft (100) of any one of claims 9 to 12,
wherein the corresponding floor attachment elements (46) of the passenger cabin (40) comprise at least one seat rail and/or at least one hard point of the aircraft (100).

14. The aircraft (100) of any one of claims 9 to 13,
wherein the storage cabinet (10) comprises adequately small dimensions for it to be removed, in the fully equipped state of the passenger cabin (40), from the aircraft (100) in one piece through an external door (50) of the passenger cabin (40).

## Patentansprüche

1. Ein Stauschrank (10) für eine Passagierkabine (40) eines Transportmittels zum Verstauen von Ausrüstung, der Stauschrank (10) aufweisend:
einen Korpus (12) mit einer Höhe von mindestens 140 cm; und
ausschließlich eine Befestigungsvorrichtung (26),
wobei die Befestigungsvorrichtung (26) in einem Bodenbereich (28) des Stauschranks (10) angeordnet ist und zum lösbaren Befestigen des Stauschranks (10) an entsprechenden Bodenbefestigungselementen (46) der Passagierkabine (40) unter einem Kabinenelement ausgeführt ist;
**dadurch gekennzeichnet, dass**
der Stauschrank ausgeführt ist, dass er ausschließlich in seinem Bodenbereich befestigt wird;
die Befestigungsvorrichtung ausgestaltet ist, um in die Bodenbefestigungselemente geklickt zu werden;
die Befestigungsvorrichtung (26) zum Lösen der Befestigung des Stauschranks (26) von den entsprechenden Bodenbefestigungselementen (46) der Passagierkabine (40) durch Anheben ausgeführt ist; und
Griffe an zwei gegenüberliegenden Seitenwänden an der Außenseite des Stauschranks angeordnet sind, so dass ein Anheben des Stauschranks für den Zweck des Lösens der Befestigungsvorrichtung ermöglicht wird.

2. Der Stauschrank nach Anspruch 1,
wobei die Befestigungsvorrichtung (26) wenigstens vier Befestigungselemente (34) aufweist, die zum Befestigen des Stauschranks (10) an den entsprechenden Bodenbefestigungselementen (46) in der Passagierkabine (40) ausgeführt sind.

3. Der Stauschrank (10) nach einem der vorhergehenden Ansprüche,
wobei der Stauschrank (10) eine obere Begrenzungswand (14) aufweist;
wobei eine zu einer Außenseite des Stauschranks hin gerichtete Fläche der oberen Begrenzungswand (14) als Ablagefläche (24) nutzbar ist; und
wobei an der Ablagefläche (24) eine zu der Außenseite des Stauschranks (10) hin aufragende Leiste (22) angeordnet ist, die dazu ausgestaltet ist, die Ablagefläche (24) seitlich und zu einer Rückseite des Stauschranks (10) hin zu begrenzen.

4. Der Stauschrank (10) nach einem der vorhergehenden Ansprüche,
wobei der Stauschrank (10) eine Eigenmasse von mindestens 30 kg aufweist und zum Aufnehmen einer Ladung mit einer Masse von über 100 kg ausgeführt ist.

5. Der Stauschrank (10) nach einem der vorhergehenden Ansprüche,
wobei der Korpus (12) eine Breite von maximal 1067 mm aufweist.

6. Der Stauschrank (10) nach einem der vorhergehenden Ansprüche,
wobei der Korpus (12) eine konvex ausgestaltete Rückwand (30) aufweist.

7. Der Stauschrank (10) nach Anspruch 6,
wobei die Rückwand (30) eine Gummilippe (32) aufweist, die dazu ausgeführt ist, an einer Außenhaut (45) des Transportmittels anzuliegen.

8. Der Stauschrank (10) nach einem der vorhergehenden Ansprüche,
wobei in dem Stauschrank (10) wenigstens ein rollbarer Verpflegungswagen (46) aufnehmbar ist,
wobei der Stauschrank (10) in dem Bodenbereich (28) wenigstens eine Führungsschiene (36) zum Führen des Verpflegungswagens (46) und wenigstens eine Rampe (38) zum erleichterten Einschieben des Verpflegungswagens (46) in den Stauschrank (10) aufweist.

9. Ein Luftfahrzeug (100) mit einem Stauschrank (10) gemäß einem der Ansprüche 1 bis 8.

10. Das Luftfahrzeug (100) nach Anspruch 9,
wobei der Korpus (12) des Stauschranks (10) eine Oberkante (23) aufweist, die von dem Kabinenelement mindestens 50 mm beabstandet ist, so dass eine zu dem Überkopfgepäckfach (44) gerichtete Fläche einer oberen Begrenzungswand (14) von außen zugänglich ist und als Ablagefläche (24) nutzbar ist.

11. Das Luftfahrzeug (100) nach Anspruch 10,
wobei die Ablagefläche (24) eine rutschhemmende Oberfläche und eine zu dem Kabinenelement hin aufragende Leiste (22) aufweist, die dazu ausgestaltet ist, die Ablagefläche (24) seitlich und zu einer Rückseite des Stauschranks (10) hin zu begrenzen.

12. Das Luftfahrzeug (100) nach einem der Ansprüche 9 bis 11,
wobei der Stauschrank (10) zur Erweiterung von Stauraum eines Küchenmoduls (101) nach Ausbau einer Sitzreihe (42) in dem Luftfahrzeug (100) am Ort der Sitzreihe (42) befestigt ist.

13. Das Luftfahrzeug (100) nach einem der Ansprüche 9 bis 12,
wobei die entsprechenden Bodenbefestigungselemente (46) der Passagierkabine (40) wenigstens eine Sitzschiene und/oder wenigstens einen Hardpoint des Luftfahrzeugs (100) aufweisen.

14. Das Luftfahrzeug (100) nach einem der Ansprüche 9 bis 13,
wobei der Stauschrank (10) ausreichend geringe Maße aufweist, um in dem voll ausgestatteten Zustand der Passagierkabine (40) ausgebaut und in einem Stück durch eine Außentür (50) der Passagierkabine (40) aus dem Luftfahrzeug (100) entfernt zu werden.

## Revendications

1. Un armoire de stockage (10) pour une cabine de passagers (40) d'un moyen de transport pour stocker des équipements, avec l'armoire de rangement (10) comprenant:
un corps (12) d'une hauteur d'au moins 140 cm; et
exclusivement un dispositif de fixation (26),
dans lequel le dispositif de fixation (26) est disposé dans une zone de plancher (28) de l'armoire de stockage (10) et est conçu pour attacher de manière amovible l'armoire de stockage (10) aux éléments de fixation de plancher (46) correspondants dans la cabine de passagers (40) sous un élément de cabine; **caractérisé en ce que**
l'armoire de stockage est configurée pour être fixée exclusivement à sa région de plancher;
le dispositif de fixation est conçu pour être encliqueté dans les éléments de fixation de plancher;
le dispositif de fixation (26) est conçu pour défaire la fixation de l'armoire de stockage (26) des éléments de fixation de plancher (46) correspondants de la cabine de passagers (40) en les soulevant; et
des poignées sont disposées sur deux parois latérales opposées à l'extérieur de l'armoire de stockage, de sorte que le soulèvement de l'armoire de stockage dans le but de défaire le dispositif de fixation est facilité.

2. L'armoire de stockage de revendication 1,
dans lequel le dispositif de fixation (26) comprend au moins quatre éléments de fixation (34) conçus pour attacher l'armoire de stockage (10) aux éléments de fixation de plancher (46) correspondants dans la cabine de passagers (40).

3. L'armoire de stockage (10) de l'une quelconque des revendications précédentes,
dans lequel l'armoire de stockage (10) comprend une paroi de séparation supérieure (14);
dans lequel une surface de la paroi de séparation supérieure (14), laquelle surface fait face à l'extérieur de l'armoire de stockage, peut être utilisée comme surface de stockage (24); et
dans lequel sur la surface de stockage (24) est disposé un rebord (22) qui dépasse vers l'extérieur de l'armoire de stockage (10), lequel rebord (22) est conçu pour délimiter la surface de stockage (24) latéralement et vers l'arrière l'armoire de stockage (10).

4. L'armoire de stockage (10) de l'une quelconque des revendications précédentes,
dans lequel l'armoire de stockage (10) comprend une masse nette d'au moins 30 kg et est conçue pour recevoir une charge d'une masse supérieure à 100 kg.

5. L'armoire de stockage (10) de l'une quelconque des revendications précédentes,
dans lequel le corps (12) comprend une largeur d'au plus 1067 mm.

6. L'armoire de stockage (10) de l'une quelconque des revendications précédentes,
dans lequel le corps (12) comprend une paroi arrière convexe (30).

7. L'armoire de stockage (10) de la revendication 6,
dans lequel la paroi arrière (30) comprend une lèvre en caoutchouc (32) conçue pour s'appuyer contre une peau extérieure (45) du moyen de transport.

8. L'armoire de stockage (10) de l'une quelconque des revendications précédentes,
dans lequel au moins un chariot de restauration (46) sur des rouleaux peut être logé dans l'armoire de stockage (10),
dans lequel, dans la zone de plancher (28), l'armoire de stockage (10) comprend au moins un rail de guidage (36) pour guider le chariot de restauration (46) et au moins une rampe (38) pour faciliter le glissement du chariot de restauration (46) dans l'armoire de stockage (10).

9. Aéronef (100) comprenant une armoire de stockage (10) selon l'une quelconque des revendications 1 à 8.

10. Avion (100) selon la revendication 9,
dans lequel le corps (12) de l'armoire de stockage (10) comprend un bord supérieur (23) qui est espacé de l'élément de cabine d'au moins 50 mm, de sorte qu'une surface d'une paroi de séparation supérieure (14), fait face au hatrack (44), accessible depuis l'extérieur et peut être utilisé comme surface de stockage (24).

11. L'aéronef (100) de la revendication 10,
dans lequel la surface de stockage (24) comprend une surface antidérapante et un rebord (22) montant vers l'élément de cabine, lequel rebord (22) est conçu pour délimiter la surface de stockage (24) latéralement et vers l'arrière de l'armoire de stockage (10).

12. Avion (100) selon l'une quelconque des revendications 9 à 11,
dans le but d'élargir l'espace de stockage dans un module d'office (101), l'armoire de stockage (10) est fixée dans l'avion (100) à l'emplacement d'une rangée de sièges (42) après désinstallation de ladite rangée de sièges.

13. Aéronef (100) selon l'une quelconque des revendications 9 à 12,
dans lequel les éléments de fixation de plancher correspondants (46) de la cabine de passagers (40) comprennent au moins un rail de siège et/ou au moins un point dur de l'aéronef (100).

14. Avion (100) selon l'une quelconque des revendications 9 à 13,
dans lequel l'armoire de stockage (10) comprend des dimensions suffisamment petites pour être retirée, à l'état entièrement équipé de la cabine passagers (40), de l'aéronef (100) d'une seule pièce par une porte extérieure (50) de la cabine passagers (40).
